Europäisches Patentamt

European Patent Office

Office européen des brevets

(11) Veröffentlichungsnummer: **0 237 914 B1**

# (12) EUROPÄISCHE PATENTSCHRIFT

(45) Veröffentlichungstag der Patentschrift: **27.03.91**

(51) Int. Cl.⁵: **G01N 27/416**

(21) Anmeldenummer: **87103387.4**

(22) Anmeldetag: **10.03.87**

(54) Verfahren zur Herstellung elektrochemischer Gassensoren.

(30) Priorität: **20.03.86 DE 3609402**

(43) Veröffentlichungstag der Anmeldung:
**23.09.87 Patentblatt 87/39**

(45) Bekanntmachung des Hinweises auf die
Patenterteilung:
**27.03.91 Patentblatt 91/13**

(84) Benannte Vertragsstaaten:
**AT BE CH DE ES FR GB IT LI LU NL SE**

(56) Entgegenhaltungen:
**EP-A- 0 047 898**
**WO-A-85/02465**
**DE-A- 2 621 676**
**US-A- 4 049 503**

(73) Patentinhaber: **Bayer Diagnostic GmbH**
**Weissenseestrasse 101**
**W-8000 München 90(DE)**

(72) Erfinder: **Pollak, Herbert, Dr.**
**Liegnitzer Strasse 1**
**W-8000 München 50(DE)**

(74) Vertreter: **Müller, Heinz-Gerd, Dipl.-Ing. et al**
**BAYER AG Konzernverwaltung RP Patentab-**
**teilung**
**W-5090 Leverkusen 1, Bayerwerk(DE)**

## Beschreibung

Die Erfindung geht aus von einem Verfahren zur Herstellung elektrochemischer Gassensoren mit wenigstens einer aus einem mit Löchern bzw. Öffnungen versehenen Metallblech bestehenden Meßelektrode und einer Gegenelektrode sowie einem Gel-Elektrolyten zwischen Meß- und Gegenelektrode, wobei der Gel-Elektrolyt einem Polymerisationsvorgang unterzogen wird, bevor das Metallblech für die Meß- und/oder Gegenelektrode auf die Oberfläche des Gel-Elektrolyten aufgebracht wird.

Gassensoren der genannten Art sind aus DE-A 24 36 261, DE-A 26 21 676 sowie EP-A 0 047 898 bekannt. Die Meßzelle dieser Gassensoren besteht dabei im wesentlichen aus einem zylinderförmigen, festen Gel-Elektrolyten, wobei auf der einen Grundfläche des Gel-Elektrolyt-Zylinders die Meßelektrode und auf der anderen Grundfläche die Gegenelektrode angebracht ist. Die Meßelektrode besteht dabei aus einem Metallblech mit darin vorgesehenen Löchern, aus einem feinen Metalldrahtgitter, aus metallischen Geweben, Sieben, Membranen oder auch aufgedampften oder gesinterten Elektroden, wobei die Meßelektrode in jedem Fall Durchgänge haben muß, damit die Moleküle des zu messenden Gases an die Dreiphasenzone gelangen können, die sich am Übergang zwischen der Elektrode (feste Phase) und dem Gel-Elektrolyten (quasi - flüssige Phase) befindet, wobei das Gas die dritte, nämlich gasförmige Phase darstellt. In dieser Zone, nämlich an der den Gasmolekülen zugänglichen Grenze zwischen der Meßelektrode und dem Elektrolyten, findet eine elektrochemische Reaktion aufgrund der Gegenwart der zu messenden Gaskomponente statt, wodurch Elektronen erzeugt oder benötigt werden, so daß ein Strom fließt, der dann als Maß für die Konzentration der zu messenden Gaskomponente herangezogen wird Zwischen Meß- und Gegenelektrode kann gegebenenfalls eine zusätzliche Bezugselektrode angeordnet sein. Aus EP-A 0 047 898 ist ferner bekannt, daß man den Gel-Elektrolyten einem Polymerisationsvorgang unterzieht, bevor das Metallblech für die Meß- und/oder Gegenelektrode auf die Oberfläche des Gel-Elektrolyten aufgebracht wird.

Die Dreiphasenzone, d.h. der Übergang zwischen Meßelektrode und Elektrolyt, ist für die Empfindlichkeit, das zeitliche Ansprechverhalten, die Reproduzierbarkeit, die Langzeitstabilität und die Gaskomponenten-Selektivität, also für die Eigenschaften des Gassensors, von entscheidender Bedeutung. In der Vergangenheit wurden daher Untersuchungen gemacht, wie die Dreiphasenzone im Hinblick auf die genannten Eigenschaften des Gassensors optimiert und insbesondere im Hinblick auf den Fertigungsvorgang definierter festgelegt werden kann. Diese Bemühungen haben jedoch noch nicht zu befriedigenden Gassensoren geführt, die reproduzierbar herzustellen sind, eine hohe Empfindlichkeit aufweisen und auch über lange Zeiträume hinweg stabil und zuverlässig arbeiten.

Bei Untersuchungen in Zusammenhang mit der vorliegenden Erfindung wurde festgestellt, daß die für viele Anwendungsfälle nicht ausreichende Reproduzierbarkeit, d.h. die zwischen den einzelnen Meßzellen nicht gleiche bzw. reproduzierbare Abhängigkeit zwischen Gaskonzentrationen und Meßwerten, im wesentlichen auf die nicht einwandfreie, reproduzierbare und nicht definierte Anbringung der Meßelektrode an der Geloberfläche zurückzuführen ist. Bei Untersuchungen herkömmlicher Meßzellen wurde insbesondere festgestellt, daß die aus einem Drahtgitter oder auch einem mit Löchern versehenen Metallblech bestehende Meßelektrode nicht gleichmäßig mit dem Gel kontaktiert war, wobei die Elektrode einerseits vom Gelelektrolyten "überschwemmt" war und andererseits die Meßelektrode nicht über ihre gesamte aktive Fläche hinweg fest und dauerhaft auf der Oberfläche des Gelelektrolyten an allen Stellen gleichmäßig auflag bzw. mit ihm in Berührung stand.

Der Erfindung liegt daher die Aufgabe zugrunde, ein Verfahren anzugeben, mit dem elektrochemische Gassensoren geschaffen werden können, die eine hohe Empfindlichkeit aufweisen, eine reproduzierbarere Abhängigkeit zwischen Gaskonzentration und Meßwert sowohl hinsichtlich der Absolutwerte als auch hinsichtlich des zeitlichen Verhaltens besitzen, eine Langzeitstabilität aufweisen und/oder bezüglich der Gaskomponenten selektiver sind.

Diese Aufgabe wird, ausgehend von dem eingangs beschriebenen Verfahren, erfindungsgemäß dadurch gelöst, daß vor dem Polymerisationsvorgang eine Vakuumbehandlung des Gel-Elektrolyten erfolgt.

Aufgrund der Vakuumbehandlung Gast die Gelmasse aus, so daß Luftbläschen oder durch andere Gase vorhandene Bläschen entfernt werden und sich die Elektrolytmasse verdichtet. Auf diese Weise entsteht eine Glatte Fläche für das Aufbringen des Metallblechs ohne Lunker und ohne firaterbildung, was bei herkömmlichen Meßzellen auftrat und aufgrund der dadurch unGleichmäßigen Oberfläche -u keiner befriedigenden Xontaktieruna der Elektrode mit dem Gel führte, was die Empfindlichkeit, Reproduzierbarkeit, Langzeitstabilität und Lebensdauer beeinträchtigt. Nach dieser Vakuunbehandlung erfolgt der PolymerisationsvorGang und erst danach wird erfindungsgemäß das Metallblech für die Meß- und/oder Gegenelektrode auf die Oberfläche des Gel-Elektrolyten aufgebracht. Diese erfindungsgemäße Verfahrensweise führt zu einer exakten, definierten Kontaktieruna der Elektrode mit

dem Gel, wobei ein "Überschwemmen" der Elektrode mit der Gelmasse, was bei herkömmlichen Meßzellen zu Überschwingungen der Meßsignale geführt hat, vermieden wird. Die Elektrode wird verfahrensgemäß sehr gleichmäßig mit dem Gel benetzt. Die erfindungsgemäßen Maßnahmen führen damit zu einem Gassensor, der gegenüber herkömmlichen Gassensoren wesentlich bessere Sensoreigenschaften ausweist. Aufgrund der erfindungsgemäßen Maßnahmen lassen sich daher Sensorzellen herstellen, die sich durch eine wesentlich höhere Empfindlichkeit, eine hohe Reproduzierbarkeit und geringe Streuung, ein schnelles Ansprechverhalten und eine schnelle Abklingzeit, eine lange Lebensdauer und ein sehr selektives Verhalten bezüglich der Gaskomponenten auszeichnen. Darüberhinaus ist das Herstellungsverfahren denkbar einfach, so daß die Zellen ökonomisch und effektiv gefertigt werden können.

Gemäß einer bevorzugten Ausführungsform der Erfindung wird der Polymerisationsvorgang bei einer Temperatur von 30 - 100° C, vorzugsweise 50 - 80° C, durchgeführt, wobei die Temperatur auch je nach dem verwendeten Gelmaterial gewählt wird. Durch ein derartiges Tempern wird der Polymerisationsvorgang beschleunigt, so daß die Ausbeute bei der Fertigung pro Zeiteinheit erhöht werden kann. Darüberhinaus werden die Geleigenschaften insofern entscheidend verbessert, als das Fließverhalten, die Alterung und die Austrocknung des Gels bzw. der Sensorzelle positiv beeinflußt werden.

Besonders vorteilhaft ist es, nach der Vakuumbehandlung und vor dem Polymerisationsvorgang eine Kunststoff-Folie auf die Oberfläche des Gel-Elektrolyten aufzubringen und diese erst unmittelbar vor Aufbringen der Metallbleche zu entfernen. Auf diese Weise kann die Oberfläche des Gel-Elektrolyten zusätzlich geglättet werden, was zu einer sehr glatten Geloberfläche führt, die für eine definierte, exakte Kontaktierung der Elektrode mit dem Gel von ausschlaggebender Bedeutung ist.

Damit sich die Kunststoff-Folie während des Temperns und des Polymerisationsvorgangs nicht abhebt oder unter der Folie Blasen und damit Unebenheiten entstehen, ist es vorteilhaft, die Kunststoff-Folie während des Polymerisationsvorgangs zu beschweren.

Die Kunststoff-Folie besteht in vorteilhafter Weise aus Teflon.

Damit die Fixierung der Elektrode auf dem Gel-Elektrolyten weiter verbessert wird, wird das Metallblech gemäß einer Ausführungsform der Erfindung zu einem Zeitpunkt auf die Oberfläche des Gel-Elektrolyten aufgebracht, zu dem die Oberfläche während des Polymerisationsvorgangs noch adhäsiv ist. Die Oberfläche ist also noch klebrig, so daß die Metallfolie fest haftet.

Vorzugsweise besteht das perforierte Metallblech aus Silber und ist 10 - 50 $\mu$m, vorzugsweise 20 - 30 $\mu$m und insbesondere 25 $\mu$m dick. Die Öffnungen im Metallblech werden vorteilhafterweise durch einen Ätzvorgang oder mit Laserstrahlen gebildet. Ausführungsge mäß entsprechen die Öffnungen einem Gitter mit einer Gitterkonstanten von höchstens 100 $\mu$m, vorzugsweise höchstens 50 $\mu$m oder Rundlöchern mit Lochdurchmessern von höchstens 60 $\mu$m, von höchstens 40 $\mu$m und insbesondere von 30 $\mu$m. Die Metallbleche haben gemäß einer bevorzugten Ausführungsform der Erfindung Kontaktfahnen zur elektrischen Verbindung der Meß- und/oder Gegenelektrode. Für die Meß- und Gegenelektrode werden vorzugsweise jeweils dieselben Metallbleche verwendet.

Gemäß einer weiteren bevorzugten Ausführungsform der Erfindung ist eine Diffusionsbarriere auf der Meßelektrode ohne Abstand von dieser vorgesehen. Die Diffusionsbarriere ist vorzugsweise eine PTFE-Gieß-Folie mit definierter Porosität und Dicke.

Das erfindungsgemäße Verfahren kann für die Herstellung sowohl von Zweielektroden-Zellen als auch Dreielektroden-Zellen angewandt werden, wobei im letzteren Falle eine Bezugselektrode zwischen Meß- und Gegenelektrode vorgesehen ist.

Die Erfindung wird nachstehend an Hand der Zeichnungen näher erläutert. Es zeigen:

Fig. 1    in Aufsicht ein Ausführungsbeispiel eines Gassensors, der nach dem erfindungsgemäßen Verfahren hergestellt ist und

Fig. 2    den Gassensor im Querschnitt.

In einem zylindrischen Mantel 1 befindet sich ein Gelelektrolyt 2, auf dessen oberer Basisfläche eine Meßelektrode 3, auf dessen unterer Basisfläche eine Gegenelektrode 4 und dazwischen eine Bezugselektrode 11 angebracht ist. Die Gegenelektrode 4 ist mittels eines Deckels 5 nach außen hin gasdicht geschützt und weist eine mit ihr einstückig ausgebildete Anschlußfahne 6 für einen elektrischen Anschluß auf.

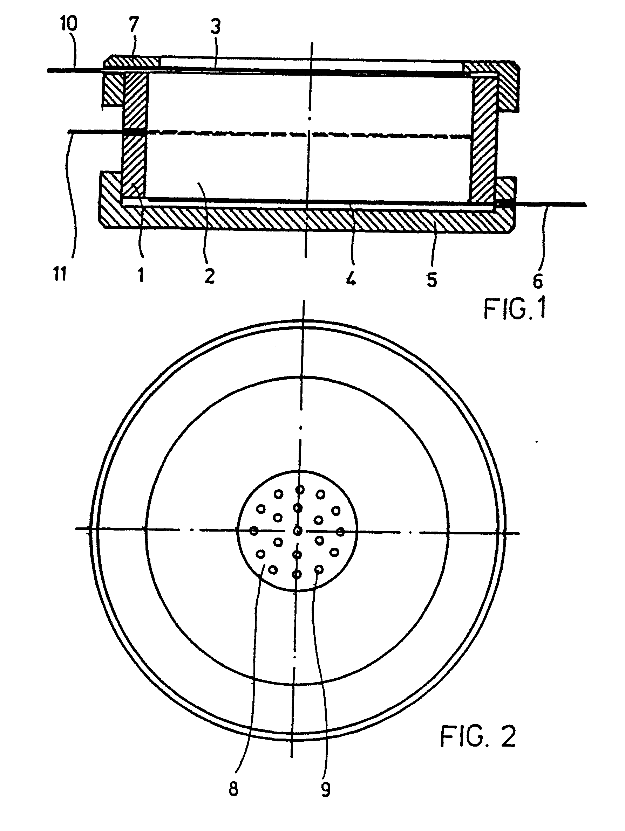

Die Meßelektrode 3 ist, wie insbesondere auf Figur 1 ersichtlich ist, teilweise mit einem Blendenring 7 abgedeckt, so daß nur noch ein Bereich 8 der Meßelektrode 3 dem zu messenden Gas ausgesetzt ist. Die Meßelektrode 3 besitzt im offenen Bereich 8 Löcher 9, durch die Gasmoleküle zum Gel-Elektrolyten bzw. an die Übergangszone zwischen Meßelektrode 3 und Gel-Elektrolyt 2 gelangen. Ebenso wie die Gegenelektrode 4 besitzt die Meßelektrode 3 ebenfalls eine Anschlußfahne 10 für eine elektrische Kontaktierung. Entsprechendes gilt auch für die Bezugselektrode 11.

Gemäß einer bevorzugten Ausführungsform der Erfindung wird der Gassensor folgendermaßen hergestellt.

Der als Zellenkörper dienende Mantel 1 wird mit dem Gel-Elektrolyten 2 gefüllt und einer Vakuumbehandlung von ca. 1 - 5 Minuten, beispielsweise in einem Exikator, unterzogen, so daß die Gelmasse ausgasen kann und dadurch eine Kraterbildung vermieden wird. Volumenverluste werden anschließend durch Nachfüllen ersetzt. Danach werden die Basisflächen des entgasten Gel-Elektrolytkörpers mit einer glatten PTFE-Folie sorgfältig und blasenfrei abgedeckt, gegebenenfalls mit Gewichten beschwert und in einem Ofen bei Temperaturen getempert, die zwischen 30 und 100° liegen und je nach der Beschaffenheit der Gelmasse und den gegebenen Umständen gewählt werden kann. Vorzugsweise werden die Zellen bei 70° C getempert. Der Polymerisationsvorgang läuft daher schneller ab, als bei Zimmertemperatur.

Unmittelbar vor dem Aufsetzen der Elektroden wird die Folie von den Basisflächen des Gelkörpers entfernt und die Elektroden fest aufgedrückt. Die Gegenelektrode 4 wird mit dem Deckel 5 gasdicht abgeschlossen und die Meßelektrode 3 mittels des Blendenrings 7 fixiert.

Aufgrund des erfindungsgemäßen Herstellungsverfahrens ist die Fertigung der Gassensoren einfach und schnell durchzuführen. Infolge der exakten, definierten Kontaktierung der Elektroden mit dem Gel ergeben sich ausgezeichnete Zelleneigenschaften. Die Ansprech- und Abklingzeit ist bei den gemäß dem erfindungsgemäßen Verfahren hergestellten Gassensoren außerordentlich kurz, und die Empfindlichkeitsstreuung kann in definiertem Maße über die Geometrie der Elektrode vorgenommen werden. Darüberhinaus ergeben sich nur geringe Streuungen zwischen den einzelnen Exemplaren, so daß die Reprozierbarkeit bezüglich des Signalverlaufs und der Signalgrößen sehr gut ist. Weiterhin weisen derartige Zellen eine lange Lebensdauer auf.

**Ansprüche**

1. Verfahren zur Herstellung elektrochemischer Gassensoren mit wenigstens einer aus einem mit Löchern bzw. Öffnungen versehenen Metallblech bestehenden Meßelektrode und einer Gegenelektrode, sowie einem Gel-Elektrolyten zwischen Meß- und Gegenelektrode, wobei der Gel-Elektrolyt einem Polymerisationsvorgang unterzogen wird, bevor das Metallblech für die Meß- und/oder Gegenelektrode auf die Oberfläche des Gel-Elektrolyten aufgebracht wird, dadurch gekennzeichnet, daß vor dem Polymerisationsvorgang eine Vakuumbehandlung des Gel-Elektrolyten erfolgt.

2. Verfahren nach Anspruch 1, dadurch gekennzeichnet, daß der Polymerisatlonsvorgang bei einer Temperatur zwischen 30 bis 100°C, vorzugsweise zwischen 50 bis 80° C, erfolgt.

3. Verfahren nach Anspruch 1 oder 2, dadurch gekennzeichnet, daß eine Kunststoff-Folie nach der Vakuumbehandlung und vor dem Polymerisationsvorgang auf die Oberfläche des Gel-Elektrolyten aufgebracht und unmittelbar vor Aufbringen der Metallbleche entfernt wird.

4. Verfahren nach Anspruch 3, dadurch gekennzeichnet, daß die Kunststoff-Folie während des Polymerisationsvorgangs beschwert wird.

5. Verfahren nach einem der Ansprüche 1 bis 4, dadurch gekennzeichnet, daß das Metallblech zu einem Zeitpunkt auf die Oberfläche des Gel-Elektrolyten aufgebracht wird, zu dem die Oberfläche während des Polymerisationsvorgangs noch adhäsiv ist.

6. Verfahren nach einem der Ansprüche 1 bis 5, dadurch gekennzeichnet, daß das Metallblech aus Silber besteht.

7. Verfahren nach einem der Ansprüche 1 bis 6, dadurch gekennzeichnet, daß das Metallblech 10 - 50 μm, vor zugsweise 20 - 30 μm und insbesondere 25 μm dick ist.

8. Verfahren nach einem der Ansprüche 1 bis 7, dadurch gekennzeichnet, daß die Öffnungen im Metallblech durch einen Ätzvorgang oder mittels Laserstrahlen gebildet werden.

9. Verfahren nach einem der Ansprüche 1 bis 8, dadurch gekennzeichnet, daß die Öffnungen entsprechend eines Gitters mit einer Gitterkonstanten von höchstens 100 μm, vorzugsweise höchstens 50 μm ausgebildet werden.

10. Verfahren nach einem der Ansprüche 1 bis 8, dadurch gekennzeichnet, daß die Öffnungen Rundlöcher sind, die Lochdurchmesser von höchstens 60 μm, vorzugsweise von höchstens um 40μm und insbesondere von 30 μm aufweisen.

11. Verfahren nach einem der Ansprüche 1 bis 10, dadurch gekennzeichnet, daß das Metallblech für die Meß- und/oder Gegenelektrode mit Kontaktfahnen ausgebildet wird.

12. Verfahren nach einem der Ansprüche 1 bis 11, dadurch gekennzeichnet, daß für die Meß- und die Gegenelektrode jeweils dieselben Metallbleche verwendet werden.

13. Verfahren nach einem der Ansprüche 1 bis 12, dadurch gekennzeichnet, daß eine Diffusionsbarriere auf der Meßelektrode ohne Abstand von dieser vorgesehen ist.

14. Verfahren nach Anspruch 12, dadurch gekennzeichnet, daß die Diffusionsbarriere eine PTFE-Gießfolie ist.

15. Verfahren der Ansprüche von 1 bis 14, dadurch gekennzeichnet, daß eine Bezugselektrode vorgesehen ist.

## Claims

1. Process for the production of electrochemical gas sensors with at least one measuring electrode consisting of a metal plate provided with holes or openings and a counter-electrode as well as a gel electrolyte between measuring and counter-electrodes, in which the gel electrolyte is subjected to a polymerization process before the metal plate for the measuring and/or counter-electrode is applied to the surface of the gel electrolyte, characterized in that a vacuum treatment of the gel electrolyte is carried out before the polymerization process.

2. Process according to claim 1, characterized in that the polymerization process is carried out at a temperature between 30 and 100°C, preferably between 50 and 80°C.

3. Process according to claim 1 or 2, characterized in that a plastic film is applied to the surface of the gel electrolyte after the vacuum treatment and before the polymerization process, and is removed immediately before application of the metal plates.

4. Process according to claim 3, characterized in that the plastic film is weighted during the polymerization process.

5. Process according to one of claims 1 to 4, characterized in that the metal plate is applied to the surface of the gel electrolyte at a time at which the surface is still adhesive during the polymerization process.

6. Process according to one of claims 1 to 5, characterized in that the metal plate consists of silver.

7. Process according to one of claims 1 to 6, characterized in that the thickness of the metal plate is 10 - 50 $\mu$m, preferably 20 - 30 $\mu$m and especially 25 $\mu$m.

8. Process according to one of claims 1 to 7, characterized in that the openings in the metal plate are formed by an etching process or by means of laser beams.

9. Process according to one of claims 1 to 8, characterized in that the openings are formed corresponding to a lattice with a lattice constant of a maximum of 100 $\mu$m, preferably a maximum of 50 $\mu$m.

10. Process according to one of claims 1 to 8, characterized in that the openings are round holes, which have a hole diameter of a maximum of 60 $\mu$m, preferably of a maximum of about 40 $\mu$m, and especially of 30 $\mu$m.

11. Process according to one of claims 1 to 10, characterized in that the metal plate for the measuring and/or counter-electrode is formed with contact lugs.

12. Process according to one of claims 1 to 11, characterized in that the same metal plates are used in each case for the measuring and the counter-electrode.

13. Process according to one of claims 1 to 2, characterized in that a diffusion barrier is provided on the measuring electrode without a gap from it.

14. Process according to claim 12, characterized in that the diffusion barrier is a PTFE cast film.

15. Process of the claims from 1 to 14, characterized in that a reference electrode is provided.

## Revendications

1. Procédé destiné à la fabrication de palpeurs électro-chimiques pour des gaz, équipés d'au moins une électrode de mesure constituée d'une plaque métallique munie de trous ou d'ouvertures et d'une contre-électrode, ainsi que d'un électrolyte gélifié disposé entre l'électrode de mesure et la contre-électrode, l'électrolyte gélifié étant soumis à une polymérisation avant de procéder à l'application de la plaque métallique destinée à l'électrode de mesure et/ou à la contre-électrode, sur la surface de l'électrolyte gélifié, **caractérisé en ce qu'**on procède à un traitement sous vide de l'électrolyte gélifié, avant la polymérisation.

2. Procédé selon la revendication 1, **caractérisé en ce qu'**on procède à la polymérisation à une température allant de 30 à 100°C, de préférence, de 50 à 80°C.

3. Procédé selon la revendication 1 ou 2, **caractérisé en ce qu'**on applique une feuille mince en matière synthétique, après le traitement sous vide et avant la polymérisation, sur la surface de l'électrolyte gélifié et on la retire immédiatement avant l'application de la plaque métallique.

4. Procédé selon la revendication 3, **caractérisé en ce qu'**on applique une pression sur la feuille mince en matière synthétique au cours du procédé de polymérisation.

5. Procédé selon l'une quelconque des revendications 1 à 4, **caractérisé en ce qu'**on applique la plaque métallique sur la surface de l'électrolyte gélifié, à un moment auquel la surface est encore adhésive au cours du procédé de polymérisation.

6. Procédé selon la revendication 1 à 5, **caractérisé en ce que** la plaque métalligue est constituée d'argent.

7. Procédé selon l'une quelconque des revendications 1 à 6, **caractérisé en ce que** la plaque métallique a une épaisseur de 10 à 50 $\mu$m, de préférence, de 20 à 30 $\mu$m, en particulier, de 25 $\mu$m.

8. Procédé selon l'une quelconque des revendications 1 à 7, **caractérisé en ce qu'**on pratique les ouvertures dans la plaque métallique par l'intermédiaire d'un procédé de mordançage ou au moyen de rayons laser.

9. Procédé selon l'une quelconque des revendications 1 à 8, **caractérisé en ce qu'**on pratique les ouvertures de façon à correspondre à une grille ayant une constante de grille de 100 $\mu$m au maximum, de préférence, de 50 $\mu$m au maximum.

10. Procédé selon l'une quelconque des revendications 1 à 8, **caractérisé en ce que** les ouvertures sont des trous ronds qui présentent un diamètre de 60 $\mu$m au maximum, de préférence, de 40 $\mu$m au maximum, en particulier, de 30 $\mu$m.

11. Procédé selon l'une quelconque des revendications 1 à 10, **caractérisé en ce qu'**on munit la plaque métallique destinée à l'électrode de mesure et/ou à la contre-électrode, de barrettes de contact.

12. Procédé selon l'une quelconque des revendications 1 à 11, **caractérisé en ce qu'**on utilise, chaque fois, la même plaque métallique pour l'électrode de mesure et pour la contre-électrode.

13. Procédé selon l'une quelconque des revendications 1 à 12, **caractérisé en ce qu'**on prévoit une barrière de diffusion sur l'électrode de mesure, qui ne se trouve pas à l'écart de cette dernière.

14. Procédé selon la revendication 12, **caractérisé en ce que** la barrière de diffusion est une feuille mince coulée en polytétrafluoréthylène.

15. Procédé selon l'une quelconque des revendications 1 à 14, **caractérisé en ce qu'**on prévoit une électrode de référence.

FIG.1

FIG. 2